# EUROPÄISCHE PATENTANMELDUNG

(11) **EP 4 300 234 A1**
(43) Veröffentlichungstag der Anmeldung: **03.01.2024**
(21) Anmeldenummer: 22181927.9
(22) Anmeldetag: 29.06.2022
(51) Int. Cl.: G05B 23/02

(54) **ÜBERWACHUNGSVORRICHTUNG ZUR ZUSTANDSÜBERWACHUNG EINER MASCHINE**

(71) Anmelder: Siemens Aktiengesellschaft, 80333 München (DE)
(72) Erfinder: Bronner, Johanna, 80337 München (DE); Bruhn, Cecilia Margareta, 80807 München (DE); Gigler, Alexander Michael, 86836 Untermeitingen (DE); Hangauer, Andreas, 80634 München (DE); Kehrer, Johannes, 81829 München (DE); Mittelstädt, Sebastian, 86153 Augsburg (DE)
(74) Vertreter: Siemens Patent Attorneys

(57) **Zusammenfassung**

Überwachungsvorrichtung zur Zustandsüberwachung einer Maschine (10), umfassend (20):
- eine Maschinelle Lerneinheit (21), die derart ausgebildet ist an der Maschine (10) während des laufenden Betriebs gesammelte Sensordaten, die mindestens einen Parameter der Maschine (10) umfassen, empfängt und abhängig von den Sensordaten ein Anomalie-Ergebnis und mindestens ein das Anomalie-Ergebnis begründendes Merkmal ermittelt und an eine Transfereinheit (22) übergibt,
- die Transfereinheit (22), die derart ausgebildet ist abhängig von dem mindestens einen Merkmal mindestens einen Indikator innerhalb der Sensordaten für das Anomalie-Ergebnis ermittelt und den mindestens einen Indikator an eine Interpretationseinheit (23) übergibt, und
- die Interpretationseinheit (23), die derart ausgebildet ist das Anomalie-Ergebnis abhängig von dem mindestens einen Indikator und einer Richtlinie mit Regeln, die mindestens eine Zuordnung von Indikatoren zu Fehlerarten der Maschine (10) umfasst, überprüft und bei einem positiven, eine Anomalie bestätigenden Anomalie-Ergebnis eine Steuerungsanweisung zur Ausführung an der Maschine ausgibt.

## Beschreibung

Die Erfindung betrifft eine Überwachungsvorrichtung zur Zustandsüberwachung einer Maschine sowie ein entsprechendes Verfahren und Computerprogrammprodukt.

Die Überwachung industrieller Anlagen, ob zur Anomalieerkennung oder zur Vorhersage von Wartungszyklen (Predictive Maintenance), beruht entweder auf einem optimalen Verständnis der physikalischen und technischen Hintergründe und der analytischen Beschreibbarkeit der Anlage oder aber der Verfügbarkeit einer ausreichenden Menge an Gut- und Schlechtdaten, um eine künstliche Intelligenz (AI), insbesondere einen Klassifikator, in Form eines maschinellen Lernmodell hinreichend gut zu trainieren.

Typische Anforderungen an ein Überwachungssystem sind dabei eine Kaltstartfähigkeit, d.h. eine semi-automatische Fehlererkennung auch ohne oder mit einer geringen Anzahl von Daten bereit zu stellen von der zu überwachenden Anlage, oder der Bedarf an einer schlüssigen Fehleridentifikation, die über eine Warnung in Form von "Achtung!" weit hinausgeht. Eine Entscheidung, dass ein Fehler vorliegt, soll Nachvollziehbarkeit sein und die Lösung soll auf "ähnliche, aber nicht gleiche" Installationen oder Geräte schnell und flexibel übertragbar sein.

Ein Hauptproblem ist dabei, dass weder das technische Verständnis für eine exakte und vollumfängliche analytische Beschreibung ausreicht noch vor der Inbetriebnahme genug Daten vorliegen, um ein ML-Modell zu trainieren. Häufig liegt das Expertenwissen als "Bauchgefühl" und Erfahrung oder in Form von generischen Beschreibungen vor, was sich nur schwierig mit den reellen Sensorwerte abgleichen lässt. Des Weiteren sind detaillierte Kenntnisse über Fehlervorgänge und Fehlerverhalten eines Typs einer Anlage unzureichend bekannt.

Simulationsmodelle können eine gewisse Beschreibung der zu überwachenden Anlage und deren Verhalten liefern, aber selten alle untereinander verwobenen Effekte wie Multiphysik-Ansätze, statistisch schwach korrelierte Effekte, einen zeitlichen Versatz zwischen Fehler und Ausfall modellieren. Zudem ist es sehr aufwändig quantitative Aussagen mittels eines Simulationsmodells zu erhalten, da für jede industrielle Anlage eine exakte Parametrierung des Modells vorgenommen werden muss.

Die Anlagen oder Produktionsprozesse, die überwacht werden sollen, sind typischer Weise mit einer Vielzahl von Sensoren von unterschiedlichem Typ ausgestattet, die Daten von verschiedener Qualität, bspw. Signalqualität liefern, und mit verschiedenen Arten von Datenströmen gespeist sind. Beispielsweise wird ein Signal als Spannung zwischen 0...1V oder 0...10V oder -5...5V oder Strom 0..24mA übertragen oder liegt semantisch annotiert als ZAHL+EINHEIT+FEHLERMASS+ METAINFO vor. Auch können die Sensordaten in verschiedenen Datenmodalitäten ausgeführt sein, wie z.B. Zeitreihen, RGB-2D-Bilder, 3D-Topographiedaten, multi-dimensionale Spektralkamera-Daten, sporadische Einzelmessungen ohne fixe Taktung, eventbasierte Messungen, und viele mehr.

Es ist somit eine Aufgabe der vorliegenden Erfindung, eine Vorrichtung zu schaffen, die mit wenig verfügbaren Daten für eine Anlage eine semi-automatische und nachvollziehbare Fehlererkennung durchführt und eine aussagefähige Fehlerindikation ausgibt und auch für ähnliche, aber nicht gleiche Anlagen verwendet werden kann.

Die Aufgabe wird durch die in den unabhängigen Ansprüchen beschriebenen Maßnahmen gelöst. In den Unteransprüchen sind vorteilhafte Weiterbildungen der Erfindung dargestellt.

Gemäß einem ersten Aspekt betrifft die Erfindung eine Vorrichtung zur Zustandsüberwachung einer Maschine, umfassend:
- eine Maschinelle Lerneinheit, die an der Maschine während des laufenden Betriebs gesammelte Sensordaten, die mindestens einen Parameter der Maschine umfassen, empfängt und abhängig von den Sensordaten ein Anomalie-Ergebnis und mindestens ein das Anomalie-Ergebnis begründendes Merkmal in den Sensordaten ermittelt und an eine Transfereinheit übergibt,
- die Transfereinheit abhängig von dem mindestens einen Merkmal mindestens einen Indikator innerhalb der Sensordaten für das Anomalie-Ergebnis ermittelt und den mindestens einen Indikator an eine Interpretationseinheit übergibt, und
- die Interpretationseinheit das Anomalie-Ergebnis abhängig von dem mindestens einen Indikator und einer Richtlinie mit Regeln, die mindestens eine Zuordnung von Indikatoren zu Fehlerarten der Maschine umfasst, überprüft und bei einem positiven, eine Anomalie bestätigenden Anomalie-Ergebnis eine Steuerungsanweisung zur Ausführung an der Maschine ausgibt.

Die Vorrichtung ist modular aufgeteilt in eine Daten-basierte maschinelle Lerneinheit, und eine "Physik-basierten" Interpretationseinheit. Erstere basiert auf maschinellem Lernen, d.h. wird mit datengetrieben Methoden entworfen. Domänenwissen über die zu überwachende Maschine ist hier nicht vonnöten bzw. nur minimal erforderlich. Das Domänenwissen inklusive der möglichen Anomalien ist auf abstrahierte Weise über die Richtlinien abgelegt. Die Ablage in der Form von abstrahiertem Wissen sorgt dafür, dass die Interpretation nicht spezifisch für eine bestimmte zu überwachende Maschine ist, sondern auf eine ganze Klasse von Maschinen anwendbar ist, für die die Richtlinie anwendbar ist. Durch die Kombination aus Anomalieerkennung und deren physikalischer Interpretation, ist die Vorrichtung auch ohne vorhergehende Sensordatensammlung und Datennotation an der zu überwachenden Maschine startbereit und somit Kaltstartfähig.

Eine Maschine kann aus einer einzelnen oder auch mehreren voneinander getrennten Komponente aufgebaut sein, die beispielsweise einen einzigen Fertigungsschritt oder eine Mehrzahl von Fertigungsschritten ausführt.

In einer vorteilhaften Ausführungsform umfasst die maschinelle Lerneinheit eine Anomalie-Detektionseinheit mit einem trainierten maschinellen Lernmodell, das anhand von Sensordaten, die an der Maschine in einem Normalbetrieb während einer vorgegebenen Adaptionszeitdauer nach Inbetriebnahme aufgenommen werden, an die aktuell zu überwachende Maschine angepasst wird.

Somit liefert das zur Anomaliedetektion trainierte maschinellen Lernmodell bereits nach der Adaptionszeitdauer für die zu überwachende Maschine optimierte Ergebnisse. Da die Sensordaten bei einem Normalbetrieb der Maschine gesammelt werden, ist kein manuelles Annotieren/Labeln, d.h. ein Zuordnen der Sensordaten zu einem Betriebsmodus der Maschine notwendig.

In einer vorteilhaften Ausführungsform wird das maschinelle Lernmodell in vorgegebenen zeitlichen Abständen während des Betriebs der Maschine angepasst.

Somit kann das maschinelle Lernmodell auf Änderungen der Maschine die während des Betriebs auftretende, beispielsweise durch Abnutzung oder durch geänderte äußere Bedingungen kontinuierlich angepasst werden.

In einer vorteilhaften Ausführungsform wird das Anomalie-Ergebnis ausgegeben in Form eines binären Werts, der abhängig von einem berechneten Anomaliewert, auch Anomaliescore genannt, und einem Grenzwert ermittelt wird, wobei insbesondere der Grenzwert anhand einer empirischen Verteilung des Anomaliewerts für Nicht-Anomalie-Daten festgelegt wird, oder das Anomalie-Ergebnis ausgegeben wird in Form eines Gewichts, das eine Ausgeprägtheit der Anomalie angibt.

Somit kann die flexibel eingerichtet werden, ab wann eine Anomalie vorliegt.

In einer vorteilhaften Ausführungsform umfasst die Maschinelle Lerneinheit eine Datenaufbereitungseinheit, die in zeitlicher Abfolge an der Maschine gemessene Rohdaten empfängt und die Rohdaten in zeitliche Bearbeitungsabschnitte unterteilt und/oder deren Datenformat umwandelt und/oder mehrere Komponenten der Rohdaten in einen einzigen Parameter der Sensordaten zusammenfasst und als Sensordaten ausgibt.

Die Datenaufbereitungseinheit wandelt somit Rohdaten, die in unterschiedlicher Form, in unterschiedlichen zeitlichen Abständen empfangen werden in eine einheitliche Form, bevorzugt als Vektordaten bereit.

In einer vorteilhaften Ausführungsform gleicht die Datenaufbereitungseinheit eine Teilmenge von Rohdaten, deren Eingangsrate von einer Ausgangsrate der Sensordaten abweicht, an die Ausgangsrate an.

Somit ist eine synchronisierte Signalrate aller Sensordaten sichergestellt, d.h. zu jedem Zeitpunkt, an dem ein Ausgangssignal an Sensordaten berechnet werden soll, sind die Werte aller Eingangssignale vorhanden. Das Ausgangssignal der Datenaufbereitungseinheit ist ein Vektor mit den für die Anomalie-Detektionseinheit relevanten Elementen. Die Ausgaberate ist ein fester vorgegebener Wert und entspricht der Rate, mit der die Anomaliedetektion ausgeführt wird.

In einer vorteilhaften Ausführungsform umfasst die Maschinelle Lerneinheit eine Anomalie-Erkläreinheit, die als Eingangssignal das Anomalie-Ergebnis und die Sensordaten des zugrundeliegenden Bearbeitungsabschnitts empfängt, und die nach Relevanz für das Anomalie-Ergebnis sortierten Parameter der Sensordaten als Merkmale ausgibt.

Durch die Anomalie-Erkläreinheit werden die Entscheidungen der Anomalie-Detektionseinheit nachvollziehbar dargestellt, bevorzugt durch eine erklärbare maschinelle Lernmethode.

In einer vorteilhaften Ausführungsform empfängt die Transfereinheit Sensordaten des zugrundeliegenden Bearbeitungsabschnitts und/oder zusätzlich Sensordaten der benachbarten Bearbeitungsabschnitte als Eingabesignal und ermittelt daraus für diejenigen Merkmale mit der höchsten Relevanz den mindestens einen Indikator.

Indikatoren bilden im Wesentlichen Tendenzen gegenüber dem Gutzustand ab, d.h. Verhalten von Merkmalen, wie z.B. starker Anstieg, Ausfall, Schwingen, Abfall,

In einer vorteilhaften Ausführungsform umfasst die Vorrichtung des Weiteren eine Extrahiereinheit, die derart ausgebildet ist, die Regeln und Indikatoren basierend auf Expertenwissen, Lehrbuchwissen, physikalisch analytischer Beschreibung oder eines digitalen Zwillings der Maschine abzuleiten und der Interpretationseinheit vor der Inbetriebnahme der Vorrichtung bereitzustellen.

Domänenwissen über die zu überwachende Maschine sowie die möglichen Anomalien und Ursachen der Anomalien werden auf abstrahierte Weise vorzugsweise als Teil der Interpretationseinheit abgelegt. Die Ablage in der Form von abstrahiertem Wissen sorgt dafür, dass die Interpretation nicht spezifisch für eine bestimmte zu überwachende Maschine ist, sondern auf diejenigen Maschinen anwendbar ist, für die Regeln gelten, die also zu einer bestimmten Klasse von Maschinen gehören.

In einer vorteilhaften Ausführungsform ist die Interpretationseinheit derart ausgebildet weitere Regeln und/oder Indikatoren nach der Inbetriebnahme zu empfangen und/oder zu aktualisieren.

Somit können entweder neue Fehlerarten bzw. Regeln mit den entsprechenden Indikatoren aufgenommen werden, und somit die Interpretationseinheit an sich ändernde Eigenschaften der Maschine angepasst werden.

In einer vorteilhaften Ausführungsform umfasst die Vorrichtung eine Nutzerschnittstelle, die derart ausgebildet ist, ein Anomalie-Ergebnis oder eine Regel auszugeben und/oder eine Änderung des Anomalie-Ergebnisses oder eine Änderung der Regel und/oder eine neue Regel von einem Nutzer zu empfangen.

Dies ermöglicht es Domänenwissen von einem Experten bei der Aktualisierung der Anomalie-Detektionseinheit und der Richtlinien in der Extraktionseinheit aufzunehmen.

12. Vorrichtung nach einem der vorangehenden Ansprüche, wobei die Interpretationseinheit bei einem negativen Anomalie-Ergebnis eine Bestätigung des Normalzustands der Maschine oder einen Warnhinweis mit einem möglichen Fehler abhängig von Indikatoren und der Richtlinie ausgibt.

Somit können auch bei einem negativen Anomaliergebnis mögliche Hinweise auf eine baldige Anomalie bereitgestellt werden bzw. negative Anomalie-Ergebnisse bestätigt werden.

In einer vorteilhaften Ausführungsform wird das Anpassen und/oder Aktualisieren des maschinelle Lernmodells und/oder ein Anlernen der Anomalie-Erkläreinheit und/oder die Extrahiereinheit in einer von der Maschine abgesetzten Servereinheit ausgeführt.

Dies reduziert die Prozessorlast in der Vorrichtung durch Auslagern von rechen-intensiven Prozessen in die abgesetzte Servereinheit. Auch kann die Zeitdauer für eine Aktualisierung durch eine Servereinheit mit hoher Rechenleistung reduziert werden.

Gemäß einem zweiten Aspekt betrifft die Erfindung ein Verfahren zur Zustandsüberwachung einer Maschine, umfassend die Schritte:
- in einer Maschinelle Lerneinheit (AD),
   Empfangen von an der Maschine während des laufenden Betriebs gesammelte Sensordaten, die mindestens einen Parameter der Maschine umfassen, und
   Ermitteln, abhängig von den Sensordaten, eines Anomalie-Ergebnisses und mindestens eines das Anomalie-Ergebnis begründendes Merkmal und Übergeben an eine Transfereinheit,
- Ermitteln von mindestens einem Indikator innerhalb der Sensordaten für das Anomalie-Ergebnis abhängig von den Merkmalen durch die Transfereinheit, und
   Übergeben des mindestens einen Indikators an ein Interpretationseinheit (PI), und
- Überprüfen des Anomalie-Ergebnisses abhängig von dem mindestens einen Indikator und einer Richtlinie mit Regeln, die mindestens eine Zuordnung von Indikatoren zu Fehlerarten der Maschine umfasst, durch die Interpretationseinheit (PI) und Ausgeben einer Steuerungsanweisung zur Ausführung an der Maschine bei einem positiven, eine Anomalie bestätigenden Anomalie-Ergebnis.

Das Verfahren hat die gleichen wie die Vorrichtung.

Ein dritter Aspekt der Erfindung betrifft ein Computerprogrammprodukt, umfassend ein nicht flüchtiges computerlesbares Medium, das direkt in einen Speicher eines digitalen Computers ladbar ist, umfassend Programmcodeteile, die bei Ausführung der Programmcodeteile durch den digitalen Computer diesen veranlassen, die Schritte des Verfahrens durchzuführen.

Sofern es in der nachfolgenden Beschreibung nicht anders angegeben ist, beziehen sich die Begriffe "empfangen", "ermitteln", "übergeben", "überprüfen" und dergleichen, vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können, beispielsweise als elektrische Impulse. Die Vorrichtung und darin enthaltene Einheiten, wie beispielsweise die Maschinelle Lerneinheit oder die Transfereinheit und dergleichen kann bzw. können einen oder mehrere Prozessoren, umfassen und sind derart ausgebildet die genannten Handlungen, Prozesse oder Verarbeitungsschritte auszuführen.

Bei einem Prozessor kann es sich insbesondere um einen Hauptprozessor (engl. Central Processing Unit, CPU), einen Mikroprozessor oder einen Mikrokontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln.

Ein Computerprogrammprodukt, wie z. B. ein Computerprogrammmittel, kann beispielsweise als Speichermedium, wie zum Beispiel einer Speicherkarte, USB-Stick, CD-ROM, DVD oder auch in Form einer herunterladbaren Datei von einem Server in einem Netzwerk bereitgestellt oder geliefert werden.

Ausführungsbeispiele des erfindungsgemäßen Verfahrens und der erfindungsgemäßen Anordnung sind in den Zeichnungen beispielhaft dargestellt und werden anhand der nachfolgenden Beschreibung näher erläutert. Es zeigen:
- Fig. 1: ein erstes Ausführungsbeispiel der erfindungsgemäßen Vorrichtung in einer Anwendungsumgebung in schematischer Darstellung;
- Fig. 2: eine Detailansicht des Ausführungsbeispiels der erfindungsgemäßen Vorrichtung mit Funktionseinheiten in schematischer Darstellung;
- Fig. 3: ein Ausführungsbeispiel des erfindungsgemäßen Verfahrens als Ablaufdiagram;
- Fig. 4: ein Ausführungsbeispiel von gesammelten Sensordaten und deren Aufbereitung durch die erfindungsgemäße Vorrichtung in schematischer Darstellung;
- Fig. 5: ein Ausführungsbeispiel eines initialen oder wiederholten Trainings von Funktionseinheiten der erfindungsgemäßen Vorrichtung in schematischer Darstellung; und
- Fig. 6: ein zweites Ausführungsbeispiel der erfindungsgemäßen Vorrichtung mit abgesetzten Funktionseinheiten in schematischer Darstellung.

Einander entsprechende Teile sind in allen Figuren mit den gleichen Bezugszeichen versehen.

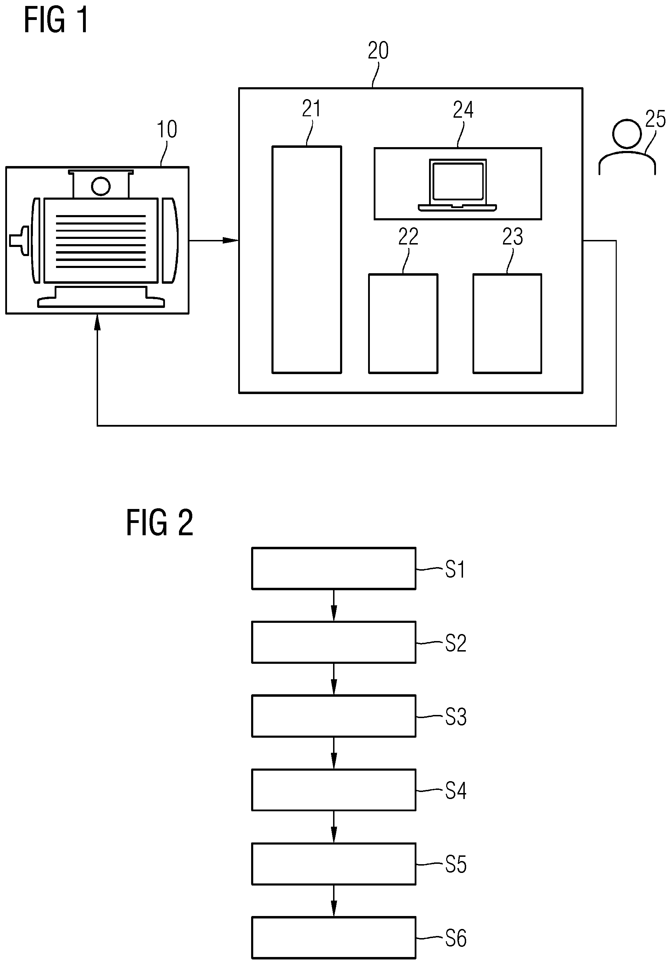

Figur 1 zeigt ein Anwendungsszenario in der ein Zustand einer Maschine 10 von einer erfindungsgemäßen Überwachungsvorrichtung 20 überwacht wird.

Die Maschine 10 umfasst beispielsweise eine oder mehrere Maschinenkomponenten einer industriellen Anlage, beispielsweise eine Presse oder eine Fräse oder einen 3D-Drucker oder dergleichen in einer Fertigungsanlage oder eine Pumpe, Mühle oder dergleichen in einer Förder- oder Verteilanlage. An oder in der Umgebung der Maschine 10 sind mindestens ein Sensor, meist eine Vielzahl von Sensoren angebracht, die insbesondere physikalische Parameter der Maschine 10 detektieren und ein Sensorsignal mit Sensordaten ausgeben.

Die Überwachungsvorrichtung 20, im Weiteren auch kurz als Vorrichtung 20 bezeichnet, ist modular aufgebaut und umfasst eine Maschinelle Lerneinheit 21, in der mindestens ein maschinelles Lernmodell zur Anomalieerkennung und für weitere Analysefunktionen implementiert ist. Die Überwachungsvorrichtung 20 umfasst des Weiteren eine Interpretationseinheit 23, in der Domänenwissen inklusive möglicher Anomalien und mögliche Fehlerursachen in abstrahierter Weise zugreifbar abgelegt ist. Die Vorrichtung 20 umfasst eine Transfereinheit 22, die die Ergebnisse und Information aus der Maschinellen Lerneinheit 21 zur physikalischen Interpretation durch die Interpretationseinheit 23 aufbereitet.

Die Vorrichtung 20 umfasst eine Ein-/Ausgabeschnittstelle 24, die eine Nutzerschnittstelle zu einem Nutzer 25, beispielsweise einem Domänenexperten oder einem Maschinenführer zur Ein- und Ausgabe von Daten, insbesondere zur Ausgabe eines Anomalie-Ergebnisses oder einer Regel und/oder zur Eingabe von Änderung des Anomalie-Ergebnisses oder der Regel und/oder zur Eingabe von neuen Regeln, bereitstellt. Über die Nutzerschnittstelle können von der Interpretationseinheit 23 ermittelte Steuerungsanweisungen beispielsweise an den Maschinenführer zur Ausführung an der Maschine ausgegeben werden. Die Ein-/Ausgabeeinheit 24umfasst in einer Ausführungsform eine Datenschnittstelle über die Steuerungsanweisungen direkt an die Maschine übermittelt werden.

Anhand von Figur 2 werden die von der Vorrichtung 20 ausgeführten Verfahrensschritte erläutert. In einem ersten Verfahrensschritt S1 empfängt die Maschinelle Lerneinheit 21 Sensordaten der Maschine 10, die während des laufenden Betriebs der Maschine 10 gesammelte wurden. Die Sensordaten enthalten dabei Daten zu mindestens einem, üblicherweise einer Vielzahl von verschiedenen Parametern der Maschine 10. Neben physikalischen Parametern wie einer Temperatur, einem Druck und dergleichen können die Sensordaten auch Angaben zu einem Füllstand eines Produktionsmittels oder Betriebsmittels der Maschine 10 oder Bilder aus dem Betrieb der Maschine 10 umfassen.

Die maschinelle Lerneinheit ermittelt abhängig von den Sensordaten im nächsten Schritt S2 ein Anomalie-Ergebnis und mindestens ein das Anomalie-Ergebnis begründendes Merkmal, das auf eine vorliegende Anomalie hinweist, und übergibt dieses an eine Transfereinheit 22.

In der Transfereinheit 22 wird für das Anomalie-Ergebnis mindestens ein Indikator innerhalb der Sensordaten abhängig von den übermittelten Merkmalen ermittelt, siehe S3 und an die Interpretationseinheit 23 übergeben. Dort wird das Anomalie-Ergebnis abhängig von dem mindestens einen Indikator und einer Richtlinie mit Regeln, die mindestens eine Zuordnung von Indikatoren zu Fehlerarten der Maschine umfasst überprüft, siehe Schritt S5. Bei einem positiven Anomalie-Ergebnis, das einen anormalen Zustand der Maschine angibt, wird eine Steuerungsanweisung abhängig von der ermittelten Fehlerart zur Ausführung an der Maschine 10 ausgegeben, siehe Schritt S6. Die Interpretationseinheit gibt bei einem negativen Anomalie-Ergebnis eine Bestätigung des Normalzustands der Maschine oder einen Warnhinweis mit einem möglichen Fehler abhängig von dem Satz an beschreibenden Indikatoren und der Richtlinie aus.

Die Maschinelle Lerneinheit liefert somit nicht nur das Anomalie-Ergebnis, welches angibt, ob die überwachte Maschine in einem Normalbetrieb, im Weiteren auch Gutzustand genannt, oder in einem vom Normalbetrieb abweichenden Schlechtzustand, vorliegt, sondern liefert auch diejenigen Merkmale, beispielsweise eine bestimmte Kombination aus Parametern der Sensordaten, die zu diesem Anomalie-Ergebnis geführt hat. Die Transfereinheit übersetzt die Merkmale in die "Sprache" der Interpretationseinheit. Der Indikator gibt beispielsweise zu einem Merkmal den Verlauf der darin enthaltenen Parameter A, B in einem betrachteten Zeitintervall an, beispielsweise "sprunghafter Anstieg des Parameters A, und einen "mittleren Wert des Parameters B" aus. Basierend auf diesen physikalisch interpretierbaren Indikatoren und der Richtlinie kann nun eine Steuerungsanweisung ausgegeben werden. Die Steuerungsanweisung basiert auf Fehlerarten der Maschine und gibt somit gezielte und konkrete Handlungsvorschläge an einen Maschinenführer oder Steuerungsbefehle an die Steuerungseinheit der Maschine aus. Somit werden die Ergebnisse aus der datenbasierten Maschinellen Lerneinheit durch die Transfereinheit in physikalische Phänomene übersetzt und von der Interpretationseinheit auf Fehlerzustände und deren Behebung abgebildet.

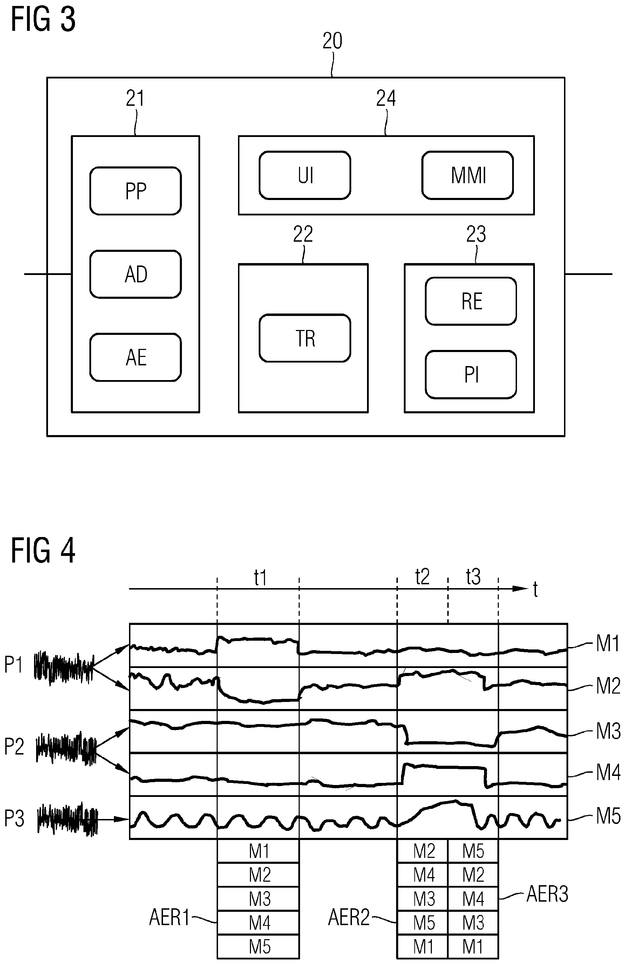

Die einzelnen Einheiten der Überwachungsvorrichtung 20 und deren Funktionseinheiten werden nun anhand von Figur 3 näher erläutert. Die Maschinelle Lerneinheit 21 umfasst eine Datenaufbereitungseinheit PP, eine Anomalie-Detektionseinheit AD sowie eine Anomalie-Erkläreinheit AE. Die Transfereinheit 22 umfasst eine Transferfunktion TR. Die Interpretationseinheit 23 umfasst eine Extaktionseinheit RE sowie die Interpretationsfunktion PI. Die Ein-/Ausgabeschnittstelle 24 umfasst die bereits erwähnte Nutzerschnittstelle UI und die Datenschnittstelle MMI.

Die Datenaufbereitungseinheit PP empfängt die in zeitlicher Abfolge an der Maschine 10 gemessenen Rohdaten und unterteilt die Rohdaten in zeitliche Bearbeitungsabschnitte und wandelt bei Bedarf deren Datenformat um, fasst mehrere Komponenten der Rohdaten in einen einzigen Parameter zusammen und gibt diese an die Maschinelle Lerneinheit aus.

Die Datenaufbereitungseinheit PP empfängt über die Datenschnittstelle MMI Sensordaten, die als Rohdaten eingehen, und wandelt diese in ein vektorielles Eingangssignal, für die Anomalie-Detektionseinheit AD. D.h., die Sensordatenpunkte liegen als Datenvektor vor. Die in der Datenaufbereitungseinheit PP empfangenen Rohdaten sind Signale von mindestens einem, typischerweise mehreren Sensoren. Diese Sensoren messen beispielsweise periodisch und liefern zu jedem Messzeitpunkt einen ein- oder auch mehrdimensionalen Messpunkt als Sensordatum, beispielsweise ein Bild, Spektrums, hyperspektrale Bild oder skalare Größe wie Strom oder Spannung. Eine Messrate der Sensoren kann unterschiedlich sein, die Sensordaten entstehen nicht notwendigerweise synchron. Unabhängig von der Modalität und Dimensionalität der Eingangsdaten, ändert sich die Größe der Sensordaten während des Betriebs der Maschine 10 nicht. Beispielsweise bliebt die Auflösung von Bildern oder Spektren im Betrieb konstant. Des Weiteren unterteilt die Datenaufbereitungseinheit PP die Rohdaten in zeitliche Bearbeitungsabschnitte abhängig vom beispielsweise zeitlichen Verlauf der Rohdatenwerte oder Sensordatenwerte.

Die Datenaufbereitungseinheit PP gleicht bei Bedarf eine Teilmenge von Rohdaten, deren Eingangsrate von einer Ausgangsrate abweicht, an die Ausgangsrate an. Für Rohdaten, deren Messrate bzw. Eingangsrate nicht gleich der Ausgaberate ist wird eine Anpassung der Samplerate durchgeführt. Dies kann bspw. mittels linearer Interpolation, Rückgabe des letzten Wertes, Multiraten-Filterung, beispielsweise (Tiefpass- )Filterung und Änderung der Abtastrate, Zerlegung des Eingangssignals der Sensordaten in Zeitfenster und Mittelwertbildung erfolgen. Hierbei werden die Sensordaten, die zwischen dem letzten und aktuellen Ausgabezeitpunkt empfangen worden sind, gemittelt. Aus diesem gemittelten Wert wird weiter gerechnet.

In jedem der obigen Fälle, findet die Mittelung zeitlich statt. Dies kann somit auch für mehrdimensionale Sensorsignale, wie beispielsweise Spektren oder Bilder angewendet werden. Dadurch ist eine synchronisierte Signalrate aller Sensorsignale sichergestellt, d.h. zu jedem Zeitpunkt, an dem ein Ausgangssignal berechnet werden soll, sind die Werte aller Eingangssignale vorhanden. Ausgangssignal der Datenaufbereitungseinheit PP ist ein Datenvektor mit den für die Anomalie-Detektionseinheit AD relevanten Elementen. Die Ausgaberate ist ein vorgegebener Wert und entspricht der Rate, mit der die Anomaliedetektion ausgeführt wird. Es werden des Weiteren zeitliche Bearbeitungsabschnitte ermittelt in Abhängigkeit vom zeitlichen Verlauf der Sensordatenwerte. Zeitliche Bearbeitungsabschnitte sind Zeitintervalle, in denen jeder der verschiedenen Parameter der Sensordaten einen gleichen Verlauf aufweist. Beispielsweise wird bei einer Änderung des zeitlichen Verlaufs von mindestens einem Parameter ein neuer zeitlicher Bearbeitungsabschnitt erstellt. Die zeitlichen Bearbeitungsabschnitte können somit von unterschiedlicher zeitlicher Länge sein.

Das Eingangssignal der Anomalie-Detektionseinheit AD ist der Datenvektor. Dieser hat eine für die konkrete Anwendung, hier die Überwachung der Maschine 10 vorgegebene und feste Länge. Komponenten des Eingangsvektors können auf verschiedene Weise aus den unverarbeiteten Sensordaten gebildet werden. Dies können Ausgangsdaten der Datenaufbereitungseinheit PP sein oder aber direkt von der Maschine 10 empfangene Sensor-Rohdaten sein. Das Ausgangssignal der Anomalie-Detektionseinheit AD ist das Anomalie-Ergebnis. Das Anomalie-Ergebnis ist ein binärer Wert, der angibt, ob eine Anomalie erkannt wurde oder nicht. Ein neuer Wert wird generiert, sobald ein neuer Eingangsvektor vorliegt, d.h. Eingang und Ausgang haben die gleiche Aktualisierungsrate.

Die Funktion der Anomalie-Detektionseinheit AD wird mittels maschinellen Lernens ausgeführt. Hierfür sind ausreichend viele Samples des Eingangsvektors, die den Regelbetrieb der Maschine 10 beschreiben, vorhanden. Bei einem Kaltstart der Überwachnungsvorrichtung 20 ohne vorheriges Trainieren der Maschinellen Lerneinheit 21 auf die Maschine 10, reicht eine geringe erste Grundmenge an Sensordaten bzw. Eingangsvektoren aus, um einen initialen Datensatz zu bilden. Aus diesem initialen Datensatz wird die in den Sensordaten liegende Eigenschaft gelernt, die die Nicht-Anomalie Fälle, also Gutzustände, von den Anomalie Fällen, also Schlechtzuständen, abgrenzt.

Die Anomalie-Detektionseinheit AD ist bevorzugt als ein Nicht-überwachtes (unsupervised) maschinelles Lernmodell, insbesondere als Autoencoder oder als IsolationForrest, One-Class support vector machine, oder als ein Verfahren zur Outlierdetektion ausgebildet. Das Anomalie-Ergebnis wird in Form eines binären Werts ausgegeben, der abhängig von einem berechneten Anomaliewert und einem Grenzwert ermittelt wird, wobei insbesondere der Grenzwert anhand einer empirischen Verteilung des Anomaliewerts für Nicht-Anomalie-Daten festgelegt wird. Das Anomalie-Ergebnis wird alternativ in Form eines Gewichts, das eine Ausgeprägtheit der Anomalie angibt, ausgegeben.

Der von der Anomalie-Detektionseinheit AD ausgegebene Anomaliewert, auch Anomaly Score genannt, des maschinellen Lernmodells wird mittels eines Grenzwerts, auch Schwellenwert genannt, in eine binäre Größe überführt oder als ein "Gewicht" das eine "Ausgeprägtheit" der Anomalie angibt, weitergegeben werden. In einer anderen Ausführungsbeispiel wird der Schwellenwert anhand eines vorgegebenen p-Wertes, d.h. einer Überschreitungswahrscheinlichkeit oder eines Signifikanzwerts, und einer empirischen Verteilung des Anomaliewertes für die Nicht-Anomalie Daten festgelegt.

Die Anomalie-Erkläreinheit AE benötigt in einem initialen Schritt Zugriff auf das trainierten maschinelle Lernmodell der Anomalie-Detektionseinheit AD und Zugriff auf die zum Trainieren verwendeten Trainingsdaten. Die Anomalie-Erkläreinheit AE empfängt als Eingangssignal das Anomalie-Ergebnis und die Sensordaten des zugrundeliegenden Bearbeitungsabschnitts. Die Anomalie-Erkläreinheit AE umfasst eine erklärbare Künstlicher Intelligenz-Methoden, beispielsweise ein in Baumstruktur aufgebautes maschinelles Lernmodell, mit dem die Entscheidungen der Anomalie-Detektionseinheit AD nachvollziehbar dargestellt werden können. Das Ausgangssignal der Anomalie-Erkläreinheit AE sind die nach Relevanz für die Entscheidung der Anomalie-Detektionseinheit AD sortierten Merkmale.

Figur 4 zeigt anhand eines zeitlichen Verlaufs von Sensordaten der Maschine 10 ein Beispiel für ein Ausgangssignal der Anomalie-Erkläreinheit AE. Die an der Maschine 10 gemessenen Sensordaten umfassen einen Parameter P1, beispielsweise eine gemessene Kraft, einen Parameter P2, beispielsweise einen Druck und einen Parameter P3, beispielsweise eine Temperatur der Maschine. Aus den Sensordaten P1 wird ein Merkmal M1 und M2, beispielsweise eine über ein vorgegebenes Zeitintervall gemittelte Kraft und eine Standardabweichung der Kraft berechnet. Aus den Parameterwerten P2 wird in gleicher Weise ein mittlerer Druck und eine Standardabweichung des Drucks als Merkmal M3 und M4 ermittelt. Von der Datenaufbereitungseinheit PP wurden zeitlichen Bearbeitungsabschnitte ermittelt. Für den Bearbeitungsabschnitt t1 gibt die Anomalie-Erkläreinheit AE ein Ausgabesignal AER1 aus. Die Reihenfolge in der die Merkmale M1,..., M5 im Ausgabesignal AER1 ausgegeben werden, gibt die Relevanz dieser Merkmale bei der Ermittlung des Anomalie-Ergebnis durch die Anomalie-Detektionseinheit AD an. Im Ausgangssignal AER1 hat das Merkmal M1 die höchste Relevanz. Die Relevanz der nachfolgenden Merkmale M2, M3, M4, M5 nimmt bezüglich des jeweils vorangehenden Merkmals ab. In gleicher Weise werden die Ausgabesignale AER2 und AER3 für die zeitlichen Bearbeitungsabschnitte t2, t3 ausgegeben. Die zeitlichen Bearbeitungsabschnitte können von unterschiedlicher Länge, also Dauer sein. Während im Bearbeitungsabschnitt t2 das Merkmal M2 den größten Einfluss auf das Anomalie-Ergebnis hatte, ist Merkmal M5 im Bearbeitungsabschnitt t3 von größter Relevanz.

In einer Ausführungsvariante sind die zeitlichen Bearbeitungsabschnitte von konstanter Länge. In einer weiteren Ausführungsvariante können mehr als ein Ausgangssignal für einen zeitlichen Bearbeitungsabschnitt ausgegeben werden. Dies ist insbesondere dann der Fall, wenn der Unterschied in der Relevanz zwischen zwei Ausgabesignalen gering ist. So könnte in Fig. 4, für einen einzigen zeitlichen Bearbeitungsabschnitt t4, der die zeitlichen Bearbeitungsabschnitte t2 und t3 umfasst, zwei Ausgabesignale, hier die Ausgabesignale AER2 und AER3 ausgegeben werden.

Die Transfereinheit 21 und darin Transferfunktion TR empfängt als Eingangssignal die von der Anomalie-Erkläreinheit AE "erklärten" Merkmale, die in der Anomalie-Detektionseinheit AD zur Entscheidung "Anomalie" geführt haben. Die die Transferfunktion TR empfängt zusätzlich die Sensordaten des zugrundeliegenden Bearbeitungsabschnitts und optional zusätzlich Sensordaten der benachbarten Bearbeitungsabschnitte als Eingabesignal. Die Transferfunktion TR übersetzt diese Information in eine "physikalisch interpretierbare Sprache", d.h. in mindestens einen, meist einen Satz an Indikatoren, welche eine der Regeln, die aus der Extrahiereinheit RE erzeugt wurden, beschreiben. Ein Indikator bildet im Wesentlichen eine Tendenz gegenüber dem Gutzustand ab, d.h. ein Verhalten eines Merkmals wie z.B. starker Anstieg, Ausfall, Schwingen, Abfall, und dergleichen.

Das Ausgangssignal der Transfereinheit 21 ist der Satz an beschreibenden Indikatoren, welche erklären, warum die Anomalie-Detektionseinheit AD zum Ergebnis "Anomalie" gekommen ist. Optional leitet die Transfereinheit 22 die Ausgangssignale der Anomalie-Erkläreinheit AE, also das Ranking der Merkmale nach Beitrag zur aktuellen Anomalie an die Interpretationseinheit 23 weiter.

Die Interpretationsfunktion PI der Interpretationseinheit 23 erhält als Eingangssignal von der Transfereinheit 22 den mindestens einen Indikator. Die Interpretationsfunktion PI überprüft das Anomalie-Ergebnis abhängig von dem mindestens einen Indikator und einer Richtlinie mit Regeln, die mindestens eine Zuordnung von Indikatoren zu Fehlerarten der Maschine umfasst. Die Interpretationsfunktion PI gibt als Ausgangssignal daraufhin entweder zurück, dass es sich tatsächlich um einen Gutzustand, beispielsweise um einen von mehreren zulässigen Betriebszuständen, oder eine tatsächlichen Anomalie Zustand handelt. Eine in der Interpretationsfunktion PI hinterlegte Steuerungsanweisung, beispielsweise eine Handlungsempfehlung, wird über die Nutzerschnittstelle UI der Ein-/Ausgabeeinheit 24 an einen Maschinenführer zurückgemeldet oder als automatisierte Reaktion über die Datenschnittstelle MMI an die Maschine 10 zurückgegeben.

Über die Extrahiereinheit RE werden physikalisch basierte Fehlerbeschreibungen an die Überprüfungsvorrichtung übergeben werden. Eingangssignal der Extrahiereinheit RE sind empfangenen. In einem Ausführungsbeispiels leitet die Extrahiereinheit RE die Regeln und Indikatoren basierend auf Expertenwissen, Lehrbuchwissen, physikalisch analytischer Beschreibung oder Information von einem digitalen Zwilling der Maschine. "Ausgangssignal" der Extrahiereinheit RE ist eine Liste von Regeln, die in der Interpretationsfunktion PI hinterlegt werden.

Bei Bedarf kann die Überwachungsvorrichtung 20 jederzeit und auf einfache Weise nachjustiert werden. Hinweise, dass nachjustieren notwendig ist, liefert die Überwachungsvorrichtung 20 selbst. Die Anomalie-Detektionseinheit AD identifiziert beispielsweise viele Anomalien, aber die Interpretationsfunktion PI kann keine davon einer bekannten Regel zuordnen. Ergibt eine Verifikation an der Maschine 10 einen neuartigen Fehler oder eine neue Ausprägung eines bekannten Fehlers, so ist Anpassung/Neuerstellung einer Regel in der Extrahiereinheit RE angezeigt. Die Interpretationseinheit 23 ist derart ausgebildet weitere Regeln und/oder Indikatoren nach der Inbetriebnahme zu empfangen und/oder zu aktualisieren.

Ergibt eine Verifikation an der Maschine 10 einen einwandfreien Betrieb, aber potentielle Umgebungsveränderungen, so ist eine Anpassung des maschinellen Models in der Anomalie-Detektionseinheit AD, beispielsweise durch ein Neutraining angezeigt. In einem Ausführungsbeispiel wird das maschinelle Lernmodell in vorgegebenen zeitlichen Abständen während des Betriebs der Maschine angepasst.

Die Überwachungsvorrichtung mit dem beschriebenen Aufbau kann für die Überwachung von unterschiedlichen Maschinen eingerichtet und betrieben werden. Beispielhaft wird eine Einrichtungs-, Einführungs- und Betriebsphase der Überwachungsvorrichtung 20 zur Überwachung einer hydraulischen Presse beschrieben. Sensoren an der Maschine ermitteln einen Druck, eine Kraft, jeweils mit einer Sammelfrequenz von 1 Hz und eine Presstemperatur sowie eine Umgebungstemperatur der Presse mit einer Sammelfrequenz von 1/60 Hz.

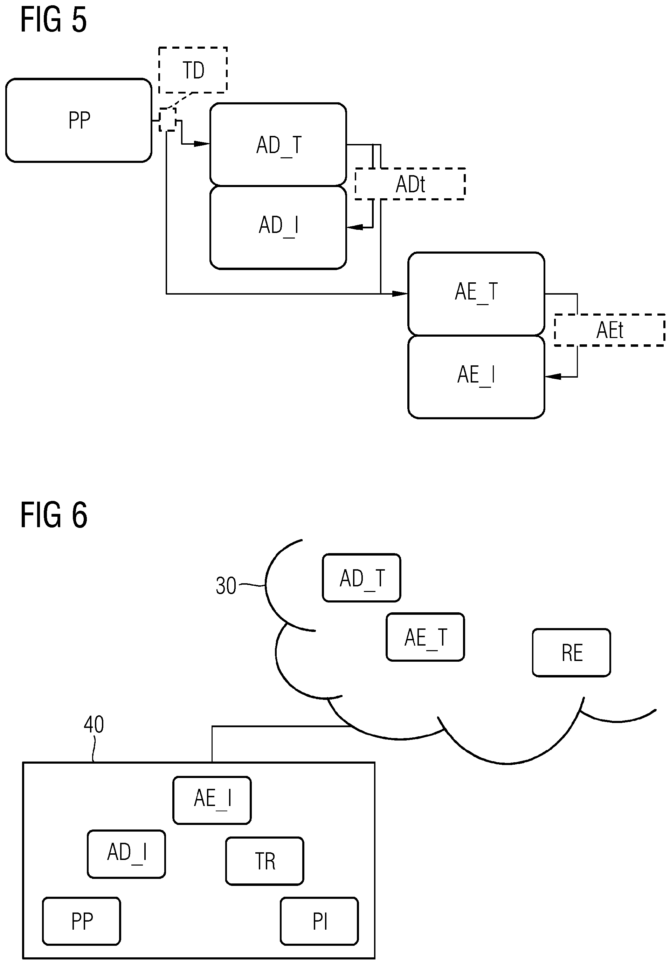

Während der Einrichtungsphase der Überwachungsvorrichtung 20 auf die Überwachung der Presse wird folgendes ausgeführt, siehe Figur 5:

Die Datenaufbereitungseinrichtung PP wird derart konfiguriert, die Sensordaten der genannten Sensoren, die in unterschiedlicher Sample-Rate, eingehen zu empfangen und daraus beispielsweise für den Druck und die Kraft jeweils einen Mittelwert und eine Varianz über ein Zeitfenster von einer Minute zu ermitteln, sowie die Presstemperatur, um die Umgebungstemperatur zu reduzieren und gibt diese als Merkmale mit einer einheitlichen Ausgaberate von 1/10 Hz auszugeben.

Ein Eingangsformat der Anomalie-Detektionseinheit AD wird auf das Ausgangsformat und die Ausgaberate der Datenaufbereitungseinheit PP eingestellt. Anomalie-Detektionseinheit AD umfasst eine Trainings- und eine Inferenzvariante eines maschinelle Lernmodell AD_T, AD_I. Die Trainingsvariante AD_T wird mit Sensordaten/Trainingsdaten TD, die in einem normalen Betriebszustands der Presse gesammelt wurden, auf den Normalzustand der Presse trainiert und gibt ein Anomalie-Ergebnis aus. Das trainierte Modell der Trainingsvariante AD_T wird ausgegeben und als Inferenzvariante der AD_I verwendet. Die Inferenzvariante empfängt als Eingangssignal die aufbereiteten Daten und gibt ein Anomalie-Ergebnis als Binärwert (wahr/falsch) für jeden Eingangswert aus.

Die Anomalie-Erkläreinheit AE umfasst eine Trainings- und eine Inferenzvariante eines maschinelle Lernmodell AE_T, AE_I. Die Trainingsvariante AE_T wird basierend auf dem trainierten Lernmodell der Anomalie-Detektionseinheit AD und bevorzugt allen Sensordaten, die bis zum Zeitpunkt des Trainierens der Anomalie-Erkläreinheit AE verfügbar sind, trainiert. Die Trainingsvariante AE_T identifiziert, wie wichtig jede Kombination der Merkmale für eine gegebene Instanz des Anomalie-Ergebnisses ist. Die Inferenzvariante AE I übernimmt das Modell der Trainingsvariante AE_T und ist eine Funktion, die bei gegebenem Datenvektor und Anomalie-Ergebnis als Eingangssignal eine Liste von Merkmalkombinationen, geordnet nach der Bedeutung für die Identifizierung des Datenvektors als eine Anomalie, ausgibt.

Die Transferfunktion TR übersetzt die ausgegebenen Merkmale der Merkmalskombinationen in "physikalische" Ausdrücke, wie beispielsweise "normal, zu hoch, zu niedrig, ansteigend, gleichbleibend, abnehmend, sodass diese Ausdrücke mit den Ausdrücken in den Regeln verglichen werden können. Die Transferfunktion TR verwendet dazu als Eingangssignal die Wichtigkeit des Merkmals, dem Datenvektor jeweils zu einem betrachteten Zeitpunkt tx, sowie die Trainingsdaten in einem bestimmten Zeitraum vor dem betrachteten Zeitpunkt tx. Alle als nicht relevanten Merkmale werden als "normal" klassifiziert. Für alle relevanten Merkmale wird der Zustand und Trend berechnet unter Verwendung der Trainingsdaten und historischer Daten als Referenz. Beispielsweise wir der Temperaturtrend berechnet, indem die Temperatur der vorausgehenden Stunde berücksichtigt wird. Die mittlere Kraft wird abhängig von den mittleren Kraftwerten in den Trainingsdaten ermittelt.

Die Extrahiereinheit RE wird mit Regeln die auf Information eines Domänenexperten für Pressen mit qualitativen Charakteristika für typische Fehlerverhalten der Presse gefüllt. Eine Information wie beispielsweise "Kühlfehler wirkt sich durch einen gleichmäßigen Anstieg der Temperatur und einem Abfall des Pressdrucks aus" wird in eine Regel für "Kühlfehler" in Form von "Temperaturtrend steigt, mittlerer Druck ist niedriger als normal" überführt.

Die Interpretationsfunktion PI wird konfiguriert, die Regeln von der Extrahiereinheit abzurufen. Die Interpretationsfunktion PI definiert eine Übereinstimmungsfunktion, die beispielsweise mittels einer Distanzfunktion eine Distanz zwischen deinem erwarteten Fehlerverhalten und einer aktuellen Beobachtung ermittelt. Eingangssignal für die Interpretationsfunktion PI ist ein aktueller physikalischer Zustand, d.h. ein Indikator, der Presse und ein erwarteter physikalischer Zustand für verschiedene Fehlerarten. Ausgabesignal sind nach Wichtigkeit geordnete Fehlerkandidaten.

Nach der Einrichtungsphase können die Einheiten und Funktionen der Überwachungsvorrichtung 10 in der Einführungsphase, d.h. innerhalb einer Adaptionszeitdauer, in ihrem bezogen auf die Presse noch untrainierten Zustand in Betrieb gehen. In der Einführungsphase, auch als Kaltstart bezeichnet, ist die Datenaufbereitungseinheit PP bereits aktiv. Die Überwachungsvorrichtung 20 kann ohne weitere Kalibrierung auf den realen Einsatz genutzt werden. Voraussetzung ist, dass die Pumpe in einem Gut-Zustand vorliegt. Die Überwachungsvorrichtung 20 sammelt zunächst Daten ohne weitere Bewertung und erhält innerhalb einer vorgegebenen Zeitspanne, die entweder fest vorgegeben oder durch einen Nutzer definiert wird und erhält erstmalig den Befehl ein "(re-)training starten ". Liegen bereits Fehler-Verdachtsfälle vor, wird der Experte/Nutzer über die Nutzerschnittstelle aufgefordert, Regeln und Labels/eine Klassifizierung für diese Fälle zu vergeben.

Die Trainingsvarianten AD_T, der Anomalie-Detektionseinheit wird mit diesen Daten trainiert und als ADt an die Inferenzvariante AD_I sowie die Trainingsvarianten AE_T der Anomalie-Erkläreinheit übergeben, siehe Fig. 5. Die Anomalie-Detektionseinheit AE_I ist nun aktiv und bewertet die an der Pumpe gesammelten Sensordaten. Die Trainingsvariante AE_T der Anomalie-Erkläreinheit wird anhand der Trainingsvariante AD_T der Anomalie-Detektionseinheit trainiert und an die Inferenzvariante AE_I übergeben, siehe AEt in Fig. 5.

In der anschließenden Betriebsphase werden die an der Pumpe während deren Betrieb gesammelten Sensordaten durch die Überwachungsvorrichtung wie bereits beschrieben prozessiert und die eine Steuerungsanweisung ausgegeben. Bewertet der Maschinenführer ein von der Überwachungsvorrichtung 20 bewerteten Zustand unterschiedlich, so kann der Maschinenführer über die Nutzerschnittstelle eine geänderte Klassifizierung des Datenpunktes eingeben, diesen als weiteren Trainingsdaten den Trainingsdaten hinzufügen und optional ein erneutes Trainieren der Anomalie-Detektionseinheit AD veranlassen. Dies wird wie bereits für die Einführungsphase, siehe Fig. 5 beschrieben durchgeführt. Ändert sich im Laufe der Betriebsphase das Fehlerverhalten der Pumpe können ein oder mehrere Regeln über die Extrahiereinheit RE aktualisiert, gelöscht oder neu hinzugefügt werden.

Die Einheiten der Überwachungsanlage können in einer einzigen physischen Einheit implementiert sein. Sie können aber auch in unterschiedlichen physischen Einheiten, beispielsweise in einer Anlageneinheit 40 in physischer Nähe zur überwachten Maschine, und einer abgesetzten Servereinheit 30, beispielsweise einer Cloud, angeordnet sein, siehe Fig. 6. Dabei sind sowohl die Trainingsvariante und die Inferenzvariante der Anomalie-Detektionseinheit AD T, AD I und der Anomalie-Erkläreinheit AE_T, AE_I als eigenständige Komponenten betreibbar. Insbesondere ist es vorteilhaft die Trainingsvariante der Anomalie-Detektionseinheit AD_T, die Trainingsvariante der Anomalie-Erkläreinheit AE_T sowie die Extrahiereinheit RE in der abgesetzten Servereinheit 40 anzuordnen und zu betreiben. Somit können rechenintensive Aufgaben, die nicht mit der aktuellen Bewertung des Maschinenzustands verbunden sind, ausgelagert werden. Die für der Bewertung der Sensordaten benötigten Einheiten, insbesondere die Datenaufbereitungseinheit PP, die Inferenzvarianten der Anomalie-Detektionseinheit und der Anomalie-Erkläreinheit AD_I, AE_I, die Transferfunktion TR sowie die Interpretationsfunktion PI, werden in der Anlageneinheit 40 angeordnet.

Die Überwachungsvorrichtung kann ohne aufwändiges Sammeln von Daten in Betrieb genommen werden und sich kontinuierlich Anpassen. Durch einfache, schnell umzusetzende Interaktionen kann der Überwachungsvorrichtung kontinuierlich mitgeteilt werden, ob sie sich verändern muss, um sich anzupassen. Wenn die Überwachungsvorrichtung einmal an einer Maschine in Betrieb genommen worden ist, kann sie ohne Modifikation zur Überwachung anderer, gleichartiger Maschinen eingesetzt werden. Lediglich die Anomalie-Detektionseinheit muss neu trainiert werden bzw. angepasst werden. Regeln können mittels der Extrahiereinheit RE verändert werden, falls sich der Maschinentyp ändert.

Alle Verfahrensschritte können durch die entsprechenden Geräte implementiert werden, die zum Ausführen des jeweiligen Verfahrensschrittes geeignet sind. Alle Funktionen, die von gegenständlichen Merkmalen ausgeführt werden können, können ein Verfahrensschritt des Verfahrens sein. Alle beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt.

## Patentansprüche

1. Überwachungsvorrichtung zur Zustandsüberwachung einer Maschine (10), umfassend (20):
- eine Maschinelle Lerneinheit (21), die derart ausgebildet ist an der Maschine (10) während des laufenden Betriebs gesammelte Sensordaten, die mindestens einen Parameter der Maschine (10) umfassen, empfängt und abhängig von den Sensordaten ein Anomalie-Ergebnis und mindestens ein das Anomalie-Ergebnis begründendes Merkmal ermittelt und an eine Transfereinheit (22) übergibt,
- die Transfereinheit (22), die derart ausgebildet ist abhängig von dem mindestens einen Merkmal mindestens einen Indikator innerhalb der Sensordaten für das Anomalie-Ergebnis ermittelt und den mindestens einen Indikator an eine Interpretationseinheit (23) übergibt, und
- die Interpretationseinheit (23), die derart ausgebildet ist das Anomalie-Ergebnis abhängig von dem mindestens einen Indikator und einer Richtlinie mit Regeln, die mindestens eine Zuordnung von Indikatoren zu Fehlerarten der Maschine (10) umfasst, überprüft und bei einem positiven, eine Anomalie bestätigenden Anomalie-Ergebnis eine Steuerungsanweisung zur Ausführung an der Maschine ausgibt.

2. Vorrichtung nach Anspruch 1, wobei die maschinelle Lerneinheit (21) eine Anomalie-Detektionseinheit (AD) mit einem trainierten maschinelles Lernmodell umfasst, das anhand von Sensordaten, die an der Maschine (10) in einem Normalbetrieb während einer vorgegebenen Adaptionszeitdauer nach Inbetriebnahme aufgenommen werden, an die zu überwachende Maschine (10) angepasst wird.

3. Vorrichtung nach Anspruch 2, wobei das maschinelle Lernmodell in vorgegebenen zeitlichen Abständen während des Betriebs der Maschine (10) angepasst wird.

4. Vorrichtung nach einem der vorangehenden Ansprüche, wobei das Anomalie-Ergebnis ausgegeben wird in Form eines binären Werts, der abhängig von einem berechneten Anomaliewert und einem Grenzwert ermittelt wird, wobei insbesondere der Grenzwert anhand einer empirischen Verteilung des Anomaliewerts für Nicht-Anomalie-Daten festgelegt wird, oder
das Anomalie-Ergebnis ausgegeben wird in Form eines Gewichts, das eine Ausgeprägtheit der Anomalie angibt.

5. Vorrichtung nach einem der vorangehenden Ansprüche, wobei die Maschinelle Lerneinheit eine Datenaufbereitungseinheit (PP) umfasst, die in zeitlicher Abfolge an der Maschine (10) gemessene Rohdaten empfängt und die Rohdaten in zeitliche Bearbeitungsabschnitte unterteilt und/oder deren Datenformat umwandelt und/oder mehrere Komponenten der Rohdaten in einen einzigen Parameter zusammenfasst und an die Maschinelle Lerneinheit (21) ausgibt.

6. Vorrichtung nach Anspruch 5, wobei die Datenaufbereitungseinheit (PP) eine Teilmenge von Rohdaten, deren Eingangsrate von einer Ausgangsrate der Sensordaten abweicht, an die Ausgangsrate angleicht.

7. Vorrichtung nach einem der Ansprüche 5 oder 6, wobei die Maschinelle Lerneinheit (21) eine Anomalie-Erkläreinheit (AE) umfasst, die als Eingangssignal das Anomalie-Ergebnis und die Sensordaten des mindestens einen zugrundeliegenden Bearbeitungsabschnitts empfängt, und die nach Relevanz für das Anomalie-Ergebnis sortierten Parameter der Sensordaten als Merkmale an die Transfereinheit (22) ausgibt.

8. Vorrichtung nach Anspruch 7, wobei die Transfereinheit (22) Sensordaten des zugrundeliegenden Bearbeitungsabschnitts und/oder zusätzlich Sensordaten der benachbarten Bearbeitungsabschnitte als Eingabesignal empfängt und daraus für diejenigen Merkmale mit der höchsten Relevanz den mindestens einen Indikator ermittelt.

9. Vorrichtung nach einem der vorangehenden Ansprüche, wobei die Interpretationseinheit (23) eine Extrahiereinheit (RE) umfasst, die derart ausgebildet ist, die Regeln und Indikatoren basierend auf Expertenwissen, Lehrbuchwissen, physikalisch analytischer Beschreibung oder einem digitalen Zwilling der Maschine abzuleiten und der Interpretationseinheit (23) vor der Inbetriebnahme der Vorrichtung (20) bereitzustellen.

10. Vorrichtung nach einem der vorangehenden Ansprüche, wobei die Interpretationseinheit (23) derart ausgebildet ist weitere Regeln und/oder Indikatoren nach der Inbetriebnahme zu empfangen und/oder zu aktualisieren.

11. Vorrichtung nach einem der vorangehenden Ansprüche, umfassend eine Nutzerschnittstelle (UI), die derart ausgebildet ist, ein Anomalie-Ergebnis oder eine Regel auszugeben und/oder eine Änderung des Anomalie-Ergebnisses oder eine Änderung der Regel und/oder eine neue Regel von einem Nutzer zu empfangen.

12. Vorrichtung nach einem der vorangehenden Ansprüche, wobei die Interpretationseinheit (23) bei einem negativen Anomalie-Ergebnis eine Bestätigung des Normalzustands der Maschine (10) oder einen Warnhinweis mit einem möglichen Fehler abhängig von dem Satz an beschreibenden Indikatoren und der Richtlinie ausgibt.

13. Vorrichtung nach einem der vorangehenden Ansprüche, wobei das Anpassen und/oder Aktualisieren des maschinelle Lernmodells und/oder ein Anlernen der Anomalie-Erkläreinheit (AE) abgesetzten Servereinheit (40) ausgeführt wird.

14. Verfahren zur Zustandsüberwachung einer Maschine (10), umfassend die Schritte:
in einer Maschinelle Lerneinheit (21),
- Empfangen (S1) von an der Maschine (10) während des laufenden Betriebs gesammelte Sensordaten, die mindestens einen Parameter der Maschine (10) umfassen,
- Ermitteln (S2), abhängig von den Sensordaten, eines Anomalie-Ergebnisses und mindestens eines das Anomalie-Ergebnis begründendes Merkmal und Übergeben an eine Transfereinheit (22),
- Ermitteln (S3) von mindestens einem Indikator innerhalb der Sensordaten für das Anomalie-Ergebnis abhängig von den Merkmalen durch die Transfereinheit (22), und
- Übergeben (S4) des mindestens einen Indikators an eine Interpretationseinheit (23), und
- Überprüfen (S5) des Anomalie-Ergebnisses abhängig von dem mindestens einen Indikator und einer Richtlinie mit Regeln, die mindestens eine Zuordnung von Indikatoren zu Fehlerarten der Maschine (10) umfasst, durch die Interpretationseinheit (23) und
- Ausgeben (S6) einer Steuerungsanweisung abhängig von der ermittelten Fehlerart zur Ausführung an der Maschine (10) bei einem positiven, eine Anomalie bestätigenden Anomalie-Ergebnis.

15. Computerprogrammprodukt, umfassend ein nicht flüchtiges computerlesbares Medium, das direkt in einen Speicher eines digitalen Computers ladbar ist, umfassend Programmcodeteile, die bei Ausführung der Programmcodeteile durch den digitalen Computer diesen veranlassen, die Schritte des Verfahrens nach Anspruch 14 durchzuführen.
